# EUROPEAN PATENT SPECIFICATION

(11) **EP 3 135 840 B1**
(45) Date of publication and mention of the grant of the patent: **28.11.2018**
(21) Application number: 15182920.7
(22) Date of filing: 28.08.2015
(51) Int. Cl.: G01C 11/08, E04G 11/22, G01C 15/00

(54) **CLIMBING FORMWORK**
KLETTERSCHALUNG
COFFRAGE GRIMPANT

(43) Date of publication of application: 01.03.2017
(73) Proprietor: DOKA GmbH, 3300 Amstetten (AT)
(72) Inventor: VOGL, Simon, 4040 Linz (AT); STEININGER, Friedrich, 4020 Linz (AT)
(74) Representative: Sonn & Partner Patentanwälte

(56) References cited:
- JP-A- 2000 314 235
- JP-A- 2002 115 395
- US-A1- 2009 041 879

## Description

The invention relates to a climbing formwork, a method for erection of a concrete structure by successively casting a plurality of casting segments and a measuring rod for mounting on a climbing formwork.

US 2009/0041879 A1 discloses a control system for a self-raising form. The control system includes a number of jack assemblies with actuator, for example hydraulic cylinders, supporting a grid support beam. For lifting the grid support beam, the actuators are activated. As the actuators move upward, a position sensor at each jack assembly sends a signal downward towards a corresponding target on the jack assembly. The jack assembly captures the distance travelled by the signal between the position sensor and the target and uses this information to determine the distance that the actuator has moved and thus the distance the actuator has moved the concrete form. The control system checks whether the computed height differentials between actuators are within a given tolerance range. If the differential exceeds the tolerance range, the lifting of the actuators is adjusted accordingly. In this way, the form panels may be lifted evenly.

JP 2000 314235 A discloses a method and a device for controlling a slip form capable of rapid measurement and operation. A plurality of reference points are provided on a slip form to form a placement space of the designed shape while sliding a concrete to be placed, and a target plate is fixed to each reference point. When the reference point is at the specified horizontal position in the designed shape, a perpendicular laser beam is emitted from the ground to pass the reference point on the target plate. The displacement vector from the reference point to the intersection of the target plate with the perpendicular laser beam is detected by a camera fixed to the slip form. The measured shape of the slip form and the difference between the measured shape and the designed shape are calculated based on the displacement vector at a plurality of reference points. An operation output to minimize the difference is calculated, and the slip form is operated by a hydraulic jack according to the operation output.

JP 2002 115395 A discloses a form elevation control. In this prior art, rear surfaces of sliding forms are supported through a plurality of yokes. Each yoke is elevated by a climbing mechanism. A photoelectric detector is provided in either of a rod for supporting yoke or the yoke. A scale is associated with the photoelectric detector to measure a relative displacement of the rod.

In the prior art, climbing formworks are used to erect a concrete structure, for example a skyscraper, in a number of successive casting steps. Such climbing formworks may be relocated between casting steps or can move upwards on their own. The latter type is usually referred to as a self-climbing formwork. Examples are shown in US 2010/0038518 A1 or WO 2013/110126 A1.

At present, geodesists have to check the position of the climbing formwork for preparing the casting of a concrete segment in order to yield accurate results. Usually, this check is repeated for each individual casting step. Thus, there is a need for enhanced surveying and adjustment procedures during erection of concrete structures in view of minimizing efforts for manual measurements.

EP 1 806 559 discloses a surveying procedure for a high-rise building subject to tilt effects and hampered use of ground-level reference points. The system uses at least three receivers of a satellite-based positioning system in order to determine the positions of three reference points, equipped with reflectors, on the uppermost level of the building under construction. The reference points that have been ascertained via the receivers are localized with an electro-optical geodesic instrument associated with the structure. In this way the position of the instrument relative to the three reference points can be acquired, and the instrument is referenced to the absolute coordinate system of the satellite-based positioning system. Furthermore, a tilt of the structure is determined gravimetrically, with a tilt sensor positioned on the uppermost construction level. Further gravimetric tilt sensors may be provided on different construction levels. The measurements are used for matching the geodesic instrument to a coordinate system that dynamically depends on the tilt of the building.

However, the prior art of EP 1 806 559 entails a number of disadvantages. First of all, the system is restricted to the determination of a central axis of the building during erection. This would be insufficient to identify the correct position of the formwork. Secondly, data acquisition with GPS is unreliable, as the receivers must be in the field of view of the GPS satellites. For suspended formworks, the connection between the receivers and the satellites is particularly difficult to maintain. A further drawback of the known system lies in the extended period of time required for post data processing.

Thus, it is an object of the invention to alleviate some or all of the drawbacks of the prior art and to propose a climbing formwork, a method for erection of a concrete structure and a measuring rod that facilitates adjustment of the formwork before casting.

This object is met by providing a climbing formwork according to claim 1, a method comprising the steps of claim 13 and a measuring rod according to claim 15.

Thus, the climbing formwork according to the instant invention comprises
a first measuring unit for determining an actual spatial arrangement of the first form element,
a second measuring unit for determining a spatial arrangement of a first lower casting segment,
a processing unit, the processing unit being arranged for calculating a target spatial arrangement of the first form element from the spatial arrangement of the first lower casting segment, the processing unit further being arranged for determining a deviation between the actual spatial arrangement and the target spatial arrangement of the first form element.

In the invention, the target spatial arrangement of the first form element is calculated in such a manner that the uppermost casting segment, i.e. the casting segment of the present casting step, matches the first lower casting segment, which was formed in a previous casting step. For this purpose, the processing unit uses the data obtained by the first measuring unit and the second measuring unit. The first measuring unit is arranged for determining the present spatial arrangement of the first form element, while the second measuring unit is arranged for determining the spatial arrangement of a first lower casting segment formed in a previous casting step. In a preferred embodiment, the first lower casting segment is arranged immediately below the current casting segment to be formed between first and second form element. Each of the current, first and second lower casting segment may constitute one level of the concrete structure, which may be a building shaft of a building. Preferably, the first measuring unit is adapted to perform a scan of at least a portion of the surface of the first form element, whereas the second measuring unit is adapted to perform a scan of at least a portion of the surface of the previously formed casting segment. The surface of first form element may be the outer side of first form element, which may be a framed formwork or a simple coated or uncoated wooden formwork element. Based on this data, the processing unit may generate a representation of the surface of first form element and first lower casting segment, respectively. Such representation may be referred to as a three-dimensional object data model. Preferably, the processing unit also has a store with information about the geometry of first form element. In this way, the 3D data model of the first form element and the previously formed casting segment may be combined to calculate the target spatial arrangement of the first form element. The position of the first form element may additionally be controlled by a geodist, preferably after completion of a number of casting steps.

In a preferred embodiment, the climbing formwork may comprise at least a first lifting device, for example comprising a linear drive such as a hydraulic cylinder, for lifting the first form element. In this way, an automatic or self-climbing formwork is provided. Alternatively, a crane is used to lift the climbing formwork after completion of a casting step.

Preferably, the climbing formwork comprises a first and a second form element, the first and second form element defining a cavity therebetween to receive concrete for forming the uppermost casting segment. In case of a self-climbing formwork, the climbing formwork preferably comprises a second lifting device for lifting the second form element.

Alternatively, the invention is applied to a single-face climbing formwork.

The first form element is movable relative to the first support structure according to at least one degree of freedom, preferably according to more than one degree of freedom, in particular according to at least one translatory and/or at least one rotational degree of freedom. The support of first form element may be in any known way, for example as shown in WO 2011/127970. Based on the determination of the deviation between the actual spatial arrangement of first form element and calculated target spatial arrangement of first form element, the spatial arrangement, i.e. the translatory and/or rotational position, of first form element may be brought in conformity with the calculated target spatial arrangement.

The positioning of first form element may be improved in several ways based on the determination of the deviation between the measured spatial arrangement of the first form element and the calculated target or ideal spatial arrangement of the first form element. To this end, processing unit may be connected to at least one of a displaying device for displaying the deviation of the first form element, a signaling device for signaling the deviation of the first form element and a drive element for bringing the first form element into the target spatial arrangement.

In a particularly simple embodiment, the displaying device displays information about the deviation of the first form element from its target position. This information can be used to manually change the position of the first form element. Furthermore, the adaptation of the spatial arrangement of the first form element may be assisted by a signaling device, which is arranged for outputting e.g. an acoustic or a visual signal.

In a particularly preferable embodiment, the processing unit is connected to at least one drive element for automatically adjusting the spatial arrangement of the first form element. The drive element may be arranged to move the first form element in at least one direction and/or to pivot the first form element about at least one axis of rotation.

In view of improving the accuracy of the calculation of the target position of the first form element, a third measuring unit may be arranged for determining a spatial arrangement of a second lower casting segment, the processing unit being arranged for calculating the target spatial arrangement of the first form element from the spatial arrangement of the first lower casting segment and the spatial arrangement of the second lower casting segment. Preferably, the second lower casting segment is arranged immediately below the first lower casting segment. In this embodiment, at least a second and third measuring unit are provided to obtain scans of the surfaces of at least two casting segments of previous casting steps. Preferably, the first, second and third measuring unit are spaced apart from each other in a vertical direction. The distances between the first, second and third measuring unit are preferably such that the first form element is in the field of view of the first measuring unit, the first lower casting segment is in the field of view of the second measuring unit and the second lower casting segment is in the field of view of the third measuring unit. It is possible that the climbing formwork comprises further measuring units for scanning further lower casting segments of previous casting steps. The processing unit may combine the measurements of the second and third measuring unit to calculate the spatial arrangement of a virtual casting segment. This virtual casting segment may be used to ascertain the target position of the first form element.

In a preferred embodiment, a further measuring unit is arranged for determining an actual spatial arrangement of a reinforcement positioned in the cavity and projecting upwardly therefrom. The processing unit preferably is arranged for calculating a target spatial arrangement of the reinforcement using the measured spatial arrangement of the first lower casting segment. Then, the processing unit may determine a deviation between the actual and the target spatial arrangement of the reinforcement. The reinforcement may then be adjusted to conform with the target position. The adjustment may be done manually or with a drive element. In this way, the reinforcement may be ideally positioned in the cavity, before the first form element is moved in its casting position. It is an advantage of this embodiment that a collision between the first form element and the reinforcement may be avoided when the formwork is closed.
Preferably, the further measuring unit is arranged above the upper end of the first form element such that an end portion of the reinforcement projecting upwards from the casting cavity is in the field of view of the further measuring unit.

In a particularly preferable embodiment, the first measuring unit and the second measuring unit are arranged on a measuring rod, the measuring rod preferably being arranged essentially vertically. The measuring rod or lance has at least a first longitudinal element carrying the first and second measuring unit, the longitudinal element preferably being arranged essentially vertically in a center position. The measuring rod may be mounted on the first support structure, in particular on a working platform of the first support structure. The working platform may have horizontally arranged frame members or beams. Such construction of the measuring rod, i.e. an elongate element with a defined longitudinal axis, is light-weight, may provide for a defined distance between the first and second measuring unit and may be easily mounted. Preferably, the first longitudinal element of the measuring rod has a hollow profile member having an essentially constant wall thickness in circumferential and longitudinal direction and a central cavity extending in longitudinal direction of the measuring rod. The longitudinal element may have a square, rectangular or circular cross-section. Preferably, the at least one longitudinal element is made of metal, in particular steel.

It is noted that the measuring rod may be used independently of the climbing formwork previously described. Thus, the instant invention also relates to a measuring rod for mounting on a climbing formwork for progressive erection of a concrete structure, comprising
a first longitudinal element,
a first measuring unit for determining a spatial arrangement of a form element, the first measuring unit being connected to a first section of the first longitudinal element,
a second measuring unit for determining a spatial arrangement of a casting segment, the second measuring unit being connected to a second section of the first longitudinal element. Preferably, the first and second measuring units are mounted on opposite ends of the measuring rod.

In a preferred embodiment, the measuring rod has at least a first and a second longitudinal element, the second measuring unit being arranged between the one end of the first longitudinal element and the one end of the second longitudinal element of the measuring rod, the third measuring unit being connected to the other end of the second longitudinal element. The first measuring unit preferably is connected to the other end of the first longitudinal element.

In this embodiment, the measuring rod has a modular construction with at least a first and a second longitudinal element being connected to each other via a releasable connection. The second measuring unit is arranged between neighboring ends of first and second longitudinal element in direction of the longitudinal axis of the measuring rod. It is noted that at least a third longitudinal element may be connected to the second longitudinal element via another releasable connection, the third measuring unit and a fourth measuring unit being arranged at opposite ends of third longitudinal element. Depending on the progress in the construction of the concrete structure, one or more additional longitudinal elements may be mounted on the measuring rod to include one or more additional measuring units for determination of the spatial arrangements of one or more additional casting segments of previous casting steps.

In a particularly preferable embodiment, the second measuring unit is mounted on an intermediary member, preferably having an elongate member, in particular a profile or channel member. The intermediary member is releasably connected to the first longitudinal element and the second longitudinal element, respectively. In the same fashion, the third measuring unit may be mounted on another intermediary member connected to the other end of the second longitudinal element. Any other measuring unit may be mounted on additional intermediary members connected to further longitudinal elements in the same way. The advantage of this construction is that the housing of the measuring unit mounted on the intermediary member is protected from bending loads which are mostly absorbed by the longitudinal elements and intermediary member. Furthermore, the intermediary member can be used to mount at least one additional element, for example a lamp, a processing unit, a vibrational sensor, thereon. Preferably, the intermediary member has a profile or channel member extending in the longitudinal direction of the measuring rod. This construction is particularly stable. The housing of the second measuring unit may be mounted on the outside of the intermediary member by any known connection, which in particular is a releasable connection.

For easy assembly, the first longitudinal element preferably has a first mounting flange for connection with a corresponding first flange of the intermediary member, the second longitudinal element having a second mounting flange for connection with a second flange of the intermediary member. The first mounting flange may be connected to the first flange of the intermediary member by means of at least one fixing member, for example a screw. In the same fashion, the second mounting flange may be connected to the second flange of the intermediary member by means of at least one further fixing member, for example a screw.

In another embodiment, the second measuring unit may be directly connected to the one end of the first longitudinal element and the one end of the second longitudinal element, respectively. For example, a screw connection may be used that extends from the first longitudinal element through the housing of the second measuring unit to the second longitudinal element.

In this embodiment, the first longitudinal element preferably has a first connecting flange for connection with a first side of the second measuring unit, the second longitudinal element having a second connecting flange for connection with a second side of the second measuring unit, the first connecting flange preferably being connected to the second connecting flange by at least one fixing element.

In another embodiment, the measuring rod has a single longitudinal element, wherein the first and second measuring units are mounted on the outside of the measuring rod in a distance to each other. In this way, the first and second measuring units are formed as sleeve members mounted on the measuring rod, which may be a profile or channel member.

In a preferred embodiment, the measuring rod is mounted on the first support structure, in particular on a working platform of the first support structure, the first support structure having a mounting suspension arranged for a swinging suspension of the measuring rod. Thus, the measuring rod is not fixedly arranged on first support structure, but is allowed to swing to some degree in order to compensate for percussions and vibrations and avoid lateral loads.

For this purpose, it is preferred that the mounting suspension comprises a cardan frame, the cardan frame being pivotable about a first essentially horizontal axis with respect to the first support structure, the measuring rod being pivotable about a second essentially horizontal axis with respect to the cardan frame. Preferably, the first horizontal axis is arranged essentially perpendicularly relative to the second horizontal axis. In this embodiment, the mounting suspension allows a swinging motion of the measuring rod about two axes, which is particularly favorable in view of percussions and vibrations during erection of the concrete structure.

A particularly simple construction of the mounting suspension may be achieved if the working platform comprises a first and a second horizontal frame member spaced by a gap, the measuring rod extending through the gap and being pivotable about an essentially horizontal axis. In this case, measuring rod may also be pivotable about a second essentially horizontal axis, which extends essentially perpendicularly to the first horizontal axis. For this purpose, a connecting member defining the first horizontal axis may extend through an opening of measuring rod, the opening having a first conical section and a second conical section.

In still another embodiment, a measuring device comprising the first measuring unit and the second measuring unit is mounted on a working platform of the support structure. The working platform is arranged at the lower end of the uppermost casting segment to be formed in the present casting step or the upper end of the casting segment of the preceding casting step. In this way, the first measuring unit of the measuring device may determine the actual spatial arrangement of the first form element, whereas the second measuring unit may determine the spatial arrangement of the first lower casting segment.

In order to allow the first and second measuring unit to determine their relative position, the first support structure preferably carries a first reference element having a predetermined shape and/or position on the first support structure, the first reference element being arranged in the field of view of both the first measuring unit and the second measuring unit. The processing unit preferably includes an image processing unit storing information about shape and/or position of the first reference element. In this case, the processing unit is adapted to determine the first reference element in the course of the measurements. In a similar manner, a second reference element of predetermined shape and/or position on the first support structure is placed in the field of view of both the second and third measuring unit.

In order to determine the spatial arrangement of the first form element and/or the previously formed casting segment, the first measuring unit preferably has at least one camera, preferably a plurality of cameras, for obtaining an image of at least a section of the surface of the first form element and/or that the second measuring unit has at least one further camera for obtaining an image of at least a section of the surface of the first lower casting segment. The processing unit comprises an image processing module for deriving a three-dimensional data model (3D model) of the outer surface of first form element facing away from the cavity between first and second form element from the image data obtained by the camera of the first measuring unit. The image processing module is also adapted to generate a 3D model of the surface of at least first lower casting segment from the image data obtained by the camera of second measuring unit. Such image processing modules are well known in the prior art. For example, US 9,019,258 B1 describes sources for such 3D models. For example, a high-resolution digital single-lens reflex (DSLR) camera may be used to capture images. In one embodiment, the first or second measuring unit each comprises a plurality of cameras, obtaining images of the first form element or first measuring unit, respectively, from different perspectives. The image processing module may use any known technique to calculate a 3D model therefrom, including but not limited to triangulation.

In a further embodiment, at least one of the first, second and third measuring unit comprises another type of optical sensor, in particular a laser scanning module, as is also known per se in the prior art. At least one of the first, second and third measuring unit may also comprise an infrared scanner (see for example US 6,442,419 B1).

In a further embodiment, a plurality of first barcode elements is arranged on the surface of the first form element and/or a plurality of second barcode elements is arranged on the surface of the first lower casting segment, the first measuring unit being arranged for determining the positions of the first barcode elements, the second measuring unit being arranged for determining the positions of the second barcode elements, each first barcode element preferably having a unique first identification code, each second barcode element preferably having a unique second identification code, the first measuring unit preferably being arranged for reading out the unique first identification codes and the second measuring unit preferably being arranged for reading out the unique second identification codes.. In this embodiment, the first or second measuring unit does not provide 3D data of extended areas of the surfaces of first form element or first lower casting segment, respectively. Instead, a plurality of distinct first or second barcode markers, in particular two-dimensional barcode markers, are arranged on the surface of the first form element or first lower cast segment, respectively. The first and second measuring unit may determine the positions of first and second barcode elements by measuring the center points of first and second barcode elements, respectively. Thus, the first or second barcode elements allow the first or second measuring unit to obtain discrete positional data of the first form element or first lower casting segment, respectively. This data is combined to determine a 3D model of the spatial arrangement of the first form element or casting segment, respectively. Of course, the same technique may be used for the second lower casting segment and so on.

The method of the instant invention comprises the steps of
calculating a target spatial arrangement of the first form element from the spatial arrangement of the first lower casting segment,
calculating a deviation between the actual spatial arrangement and the target spatial arrangement of the first form element.

In view of a fast adjustment of the climbing formwork, it is advantageous if the steps of determining the actual spatial arrangement of the first form element and determining the spatial arrangement of the first lower casting segment are performed simultaneously. In this way, the deviation of the first form element may be calculated essentially in real-time.

In addition to the aspects, embodiments, and features described above, further aspects, embodiments, and features will become apparent by reference to the figures and the following detailed description.
Fig. 1 is a schematic view of a climbing formwork for progressive erection of a building structure having a first and second form element supported by a first and second support structure, respectively, wherein a plurality of measuring units equipped with cameras are used for generating 3D data of first form element and previously formed casting segments to determine a deviation in the position of first form element from a target position;
Fig. 2 is a schematic view of the critical elements of climbing formwork depicted in Fig. 1, wherein the measuring units are mounted on a measuring rod extending in vertical direction from an uppermost level for forming the present casting segment to lower levels of the building with previously formed casting segments;
Fig. 3a is an enlarged view of the connection of one of the measuring units to the measuring rod;
Figs. 3b and 3c are views of an alternative connection of the measuring unit to the measuring rod;
Fig. 4 is an enlarged view of a first embodiment of a mounting suspension for the measuring rod;
Fig. 5 is a perspective view of the mounting suspension of Fig. 4;
Fig. 6a, 6b are enlarged views of a second embodiment of a mounting suspension for the measuring rod;
Fig. 7 is a diagram of a climbing formwork according to the invention with an alternative construction of the measuring rod;
Fig. 8 is a view of an alternative embodiment of the climbing formwork, in which a measuring device is mounted on a working platform of the support structure;
Fig. 9 is a function chart of the climbing formwork of Fig. 1 to 7;
Fig. 10 is a block diagram of a method for erecting a concrete structure by successively casting a plurality of concrete segments according to the invention; and

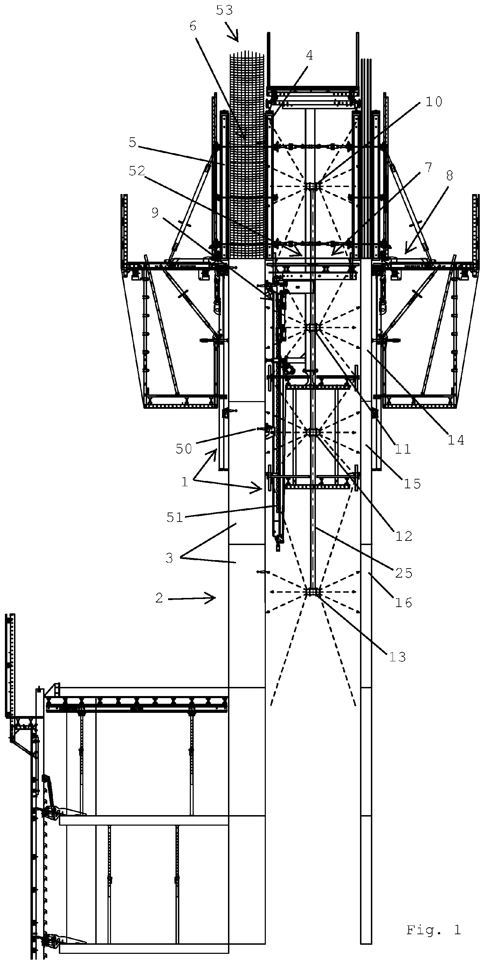

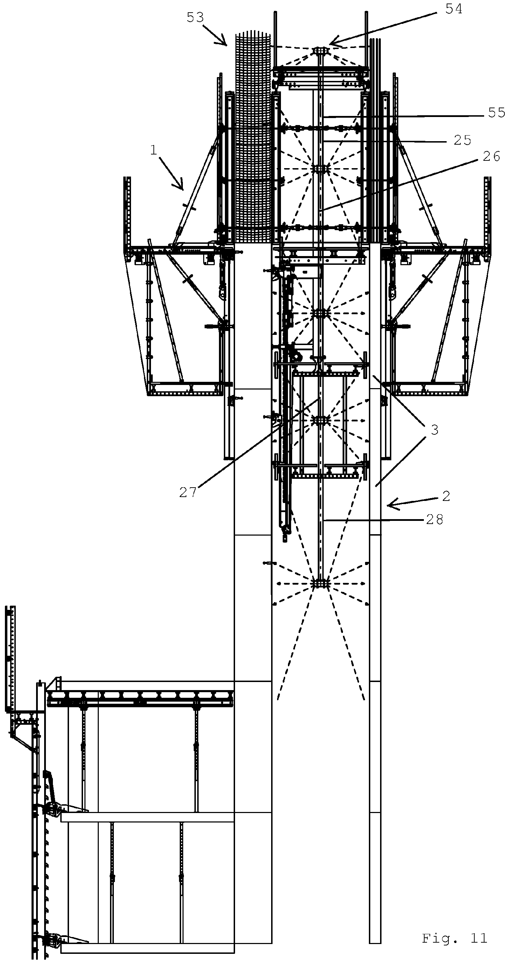

Fig. 11 is a view of an alternative embodiment of the climbing formwork, in which a further measuring unit is used for determining the position of the reinforcement in the casting cavity. Fig. 1 shows a climbing formwork 1 for progressive erection of a concrete structure 2, for example a skyscraper. The concrete structure 2 is erected in a plurality of casting steps, in which a corresponding number of casting segments 3 are formed. For this purpose, the climbing formwork 1 comprises a first form element 4 and a second form element 5. In a casting position, the first 4 and second form element 5 define a cavity or space 6 therebetween to receive concrete for forming an uppermost casting segment. As usual, reinforcements 53 are arranged in cavity 6 between first 4 and second form element 5 before casting. Reinforcements 53 project upwards of the upper end of first form element 4 and second form element 5. The climbing formwork 1 further comprises a first support structure 7 to support the first form element 4 and a second support structure 8 to support the second form element 5.

The construction of first 7 and second support structure 8 of the shown climbing formwork 1 is conventional so that detailed explanations may be omitted. As is well known in the prior art, the first support structure 7 is connected to a first lifting device 9 for lifting the first form element 4 from a first casting position for forming a first casting segment to a second casting position for forming a second casting segment, the second casting segment being arranged on top of the first casting segment.

In the shown embodiment, first lifting device 9 comprises a suspension shoe 50 attached to concrete structure 2 and a climbing profile 51. A platform or console unit 52 of first support structure 7 is connected to climbing profile 51. For moving the climbing formwork 1 upwards, climbing profile 51 is lifted, while platform unit 52 is fixed to concrete structure 2 by means of suspension shoe 50. In the next step, climbing profile 51 is fixed to the suspension shoe 50, whereafter platform unit 52 may be lifted to the next level of concrete building 2. The lifting of climbing profile 51 and platform unit 52 is facilitated by hydraulic cylinders. In a similar manner, the second support structure 8 may be connected to a second lifting device for lifting the second form element 5 from the first to the second casting position

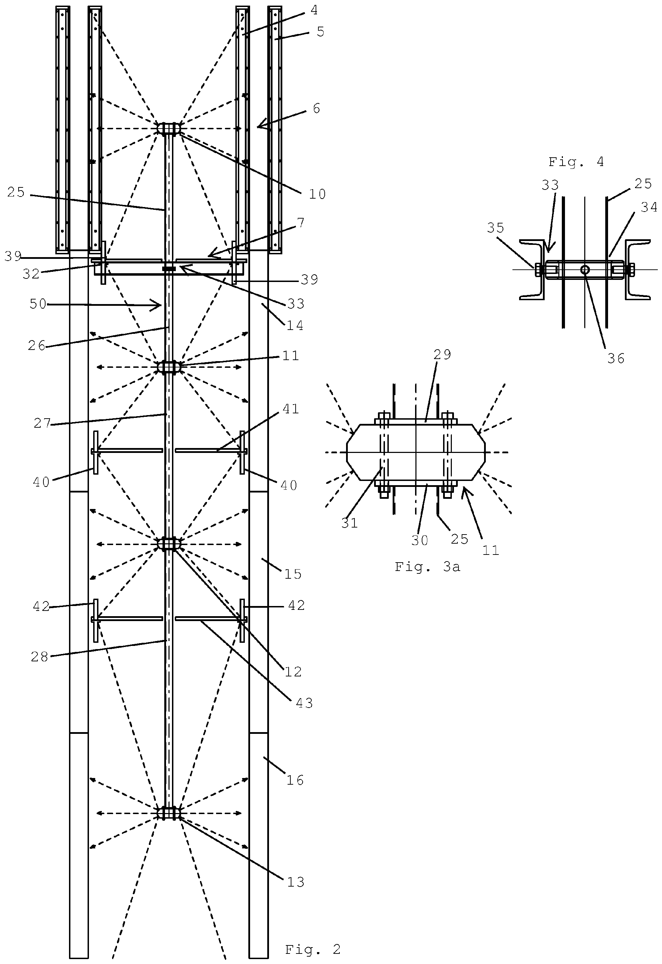

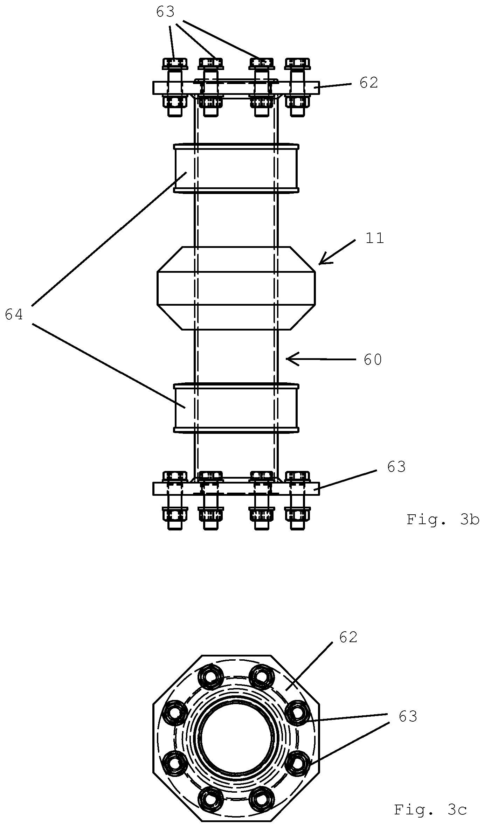

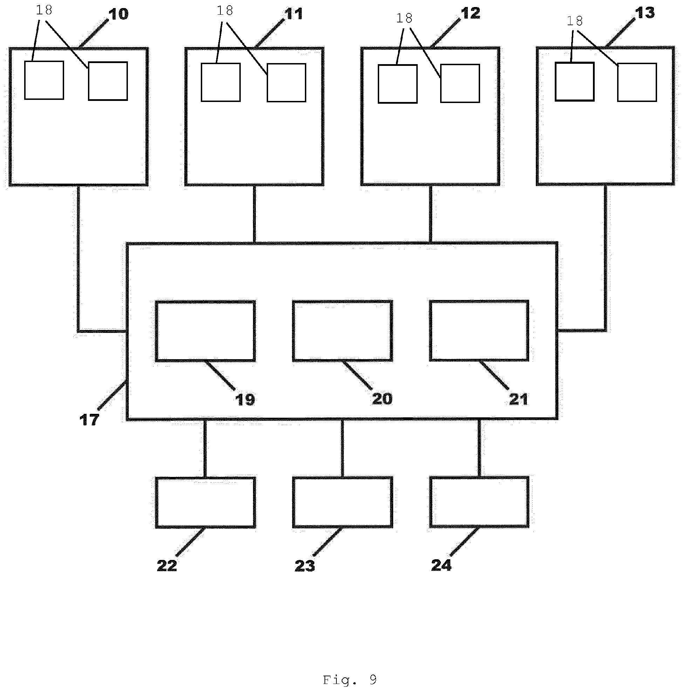

As can be seen from Fig. 1 and 2, the climbing formwork 1 further comprises a first measuring unit 10 for determining an actual spatial arrangement or position of the outer surface of first form element 4. The climbing formwork 1 further comprises a second 11, third 12 and fourth measuring unit 13 for determining the spatial arrangements of a first 14, second 15 and third lower casting segment 16. This information is used to adjust the position of first form element 4, as will be further explained below with respect to the function chart of Fig. 9.
As schematically shown in Fig. 9, the measuring units 10 to 13 are connected to a processing unit 17 for processing of the data obtained by the measuring units 10 to 13. In a preferred embodiment, the first measuring unit 10 comprises a plurality of cameras 18 for obtaining images from the surface of first form element 4. Each camera 18 of first measuring unit 10 is adapted to take an image from a different perspective. The second 11, third 12 and fourth measuring unit 13 also each contain a plurality of cameras 18, which are adapted to obtain images of the surface of first 14, second 15 or third lower casting segment 16 from different perspectives. The processing unit 17 comprises an image processing module 19 which is arranged for generating a three-dimensional data model of the first form element 4 in its current position and a three-dimensional model of each of previously formed casting segments 14, 15, 16. The processing unit 17 also has a storage 20 with geometric data of the first form element 4. Based on this data, the processing unit 17 calculates a target spatial arrangement of the first form element 4.
The processing unit 17 further comprises a comparator unit 21 for determining a deviation between the actual spatial arrangement as obtained by the first measuring unit 10 and the target spatial arrangement of the first form element 4 as calculated by the processing unit 17. The processing unit 17 is connected to at least one of a displaying device 22 for displaying the deviation of the first form element 4, a signaling device 23 for signaling the deviation of the first form element 4 and a drive element 24 for moving the first form element 4 into the target spatial arrangement. The drive element 24 may comprise any known drive means. For example, drive element 24 may include a hydraulic plunger and cylinder for tilting first form element 4. Furthermore, drive element 24 may include a carriage mechanism for horizontally displacing first form element 4, as explained in WO 2011/127970. In a less preferred embodiment, the form element 4 is manually adjusted based on the output of processing unit 17.
As can be seen from Fig. 1 and 2, the first measuring unit 10 for imaging the first form element 4 and the second 11, third 12 and fourth measuring unit 13 for imaging the first 14, second 15 and third lower casting segment 16 are arranged on a measuring rod 25, which, in a central position, is arranged essentially vertically. In the embodiment of Fig. 1, 2, the measuring rod 25 has a modular construction with a first 26, second 27 and third longitudinal element 28. The first measuring unit 10 is connected to the upper end of the first longitudinal element 26. The second measuring unit 11 is mounted between the lower end of the first longitudinal element 26 and the upper end of the second longitudinal element 27 of the measuring rod 25. The third measuring unit 12 is connected between the lower end of the second longitudinal element 27 and the upper end of the third longitudinal element 28. The fourth measuring unit 13 is mounted on the lower end of the third longitudinal element 28. For easy extension of the measuring rod 25, the first longitudinal section 26 at the lower end, has a first connecting flange 29 for connection with a first side of the second measuring unit 11, the second longitudinal section 27 having a second connecting flange 30 for connection with a second side of the second measuring unit 12. The first connecting flange 29 is connected to the second connecting flange 30 by two fixing elements 31, for example screws (see Fig. 3). The third measuring unit 12 is mounted in the same manner between the second 27 and third longitudinal element 28.
Figs. 3b, 3c show an alternative construction of measuring rod 25. In this embodiment, the measuring rod 25 comprises an intermediary member 60 for mounting the second measuring unit 11. The intermediary member 60 comprises a profile or channel member, which may have the same construction as the longitudinal elements 26, 27, 28 of measuring rod 25. The intermediary member 60 is releasably connected to neighboring ends of first longitudinal element 26 and second longitudinal element 27, respectively. For this purpose, the intermediary member 60 comprises a first flange 62 and a second flange 63 on opposite ends of intermediary member 60. The first flange 62 is releasably connected to a first mounting flange of first longitudinal element 26, whereas the second flange 63 is releasably connected to a second mounting flange of second longitudinal element 27. The first and second mounting flange may be the first connecting flange 29 and second connecting flange 30, respectively, as described with respect to the previous embodiment. In the shown embodiment, the releasable connection of intermediary member 60 to the first longitudinal elements 26 and second longitudinal element 27 comprises screws 63.

Furthermore, the intermediary member 60 is used for mounting additional elements, in the shown embodiment two lamps 64 for illuminating the shaft in which the formwork 1 is arranged.

The measuring rod 25 is mounted on the first support structure 7, which comprises a working platform 32 with a mounting suspension 33 for a swinging suspension of the measuring rod 25. Working platform 32 comprises horizontally arranged support beams and/or frame members and/or plate members, as known in the art.

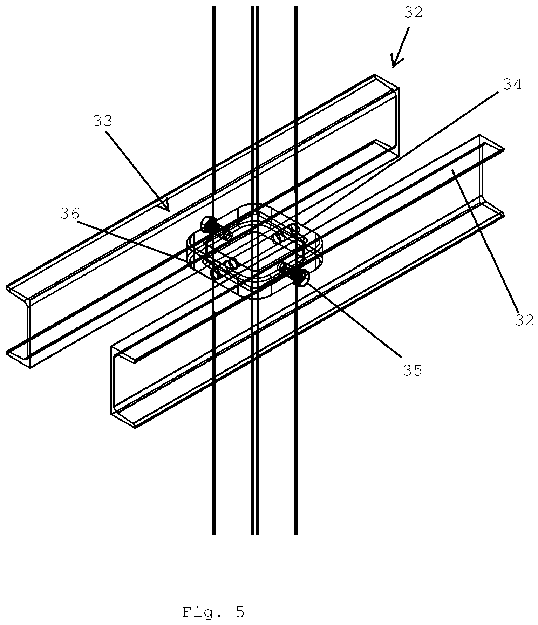

Fig. 4 and 5 show a first embodiment of the mounting suspension 33. In this embodiment, the mounting suspension 33 comprises a cardan frame 34 surrounding the measuring rod 25. The cardan frame 34 is pivotable about a first horizontal axis 35 with respect to the working platform 32. Furthermore, the measuring rod 25 is pivotable about a second horizontal axis 36 with respect to the cardan frame 34.

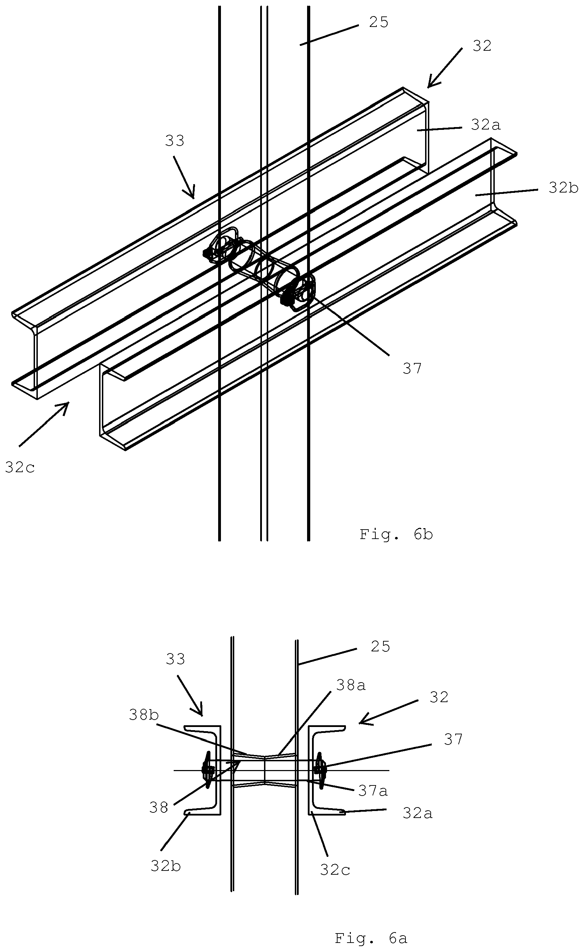

Fig. 6a and 6b show a second embodiment of the mounting suspension 33. In this embodiment, the working platform 32 comprises a first 32a and a second horizontal frame member or beam 32b spaced by a gap 32c. The measuring rod 25, in a central position, extends perpendicularly to first 32a and second frame member 32b through gap 32c. For allowing a swinging motion with respect to the central position, measuring rod 25 is pivotable about a horizontal axis 37, which extends between first 32a and second frame member 32b of working platform 32. In the shown embodiment, measuring rod 25 is also pivotable about a second essentially horizontal axis, which extends essentially perpendicularly to the first horizontal axis 37. For this purpose a connecting member 37a defining the first horizontal axis 37 extends through an opening 38 of measuring rod 25, the opening 38 having a first conical section 38a and a second conical section 38b. For facilitating the generation of the 3D-models for first form element 4 and first 14, second 15 and third lower casting segment 16 by means of the processing unit 17, the first support structure 7 carries reference elements 39 having a predetermined shape and position on the first support structure 7. In particular, first reference elements 39 are arranged on the working platform 32, which is used for the uppermost casting segment. Similarly, second reference elements 40 are arranged on a first trailing platform 41, which is arranged between the upper and lower end of the first lower casting segment 14. Third reference elements 42 are arranged on a second trailing platform 43 of the first support structure 7, which is arranged between the upper and lower end of the second lower casting segment 15. Such arrangement of reference elements may be present in further levels of the concrete structure 2 (not shown). In the shown embodiment, the first trailing platform 41 and the second trailing platform 43 are suspended on the working platform 32 of support structure 7.

In a preferred embodiment, cameras 18 of first 10, second 11, third 12 and fourth measuring unit 13 obtain image data of extended areas of first form element 4 and casting segments 14, 15, 16.

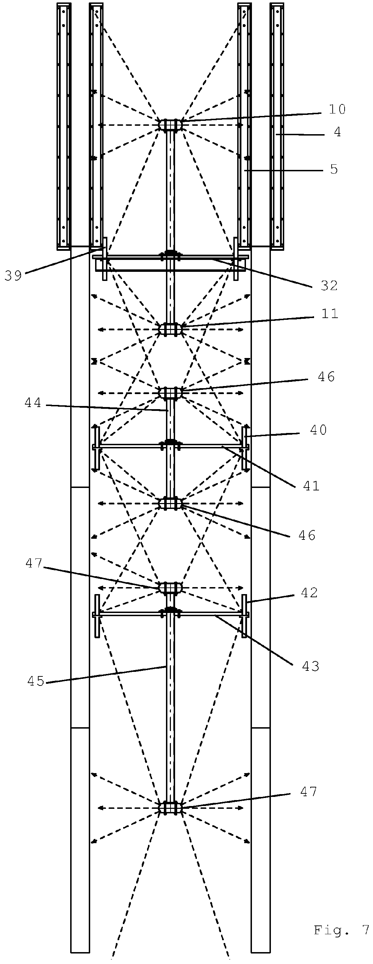

In an alternative embodiment, a plurality of first barcode elements is arranged on the surface of the first form element 4. Likewise, a plurality of second, third and fourth barcode elements are arranged on the surface of first 14, second 15 and third lower casting segment 16. The barcode elements have unique first, second, third and fourth identification codes. The measuring units 10 to 13 are arranged for reading out the first, second, third and fourth identification codes and determining the positions of the first, second, third and fourth barcode elements. For this purpose, two-dimensional barcode elements may be used, known as QR (Quick Response) Codes. These are matrix barcodes. In the processing unit 17, the positions of the barcode elements are combined to obtain 3D models of first form element 4 and casting segments 14 to 16. In this way, the 3D model for the spatial arrangement of first form element 4 is approximated by the discrete positions of first barcode elements. Likewise, the 3D models for the spatial arrangements of the previously formed casting segments 14 to 16 is approximated by the discrete positions of second, third and fourth barcode markers. The identification codes of the barcode elements are not required for determining the 3D models for the first form element 4 or lower casting segments 14 to 16, but may serve several other purposes. First, an elevational position may be easily obtained therefrom which may be beneficial for example during construction of an elevator. Second, error diagnosis is facilitated, for example if a barcode element is involuntarily removed. Fig. 7 shows the climbing formwork 1 with an alternative mounting of measuring units 10 to 13. In this embodiment, the measuring rod 25 comprises only first longitudinal element 26. First measuring unit 10 and second measuring unit 11 are mounted on opposite ends of measuring rod 25, which is mounted on working platform 32. Climbing formwork 1 further comprises a second measuring rod 44 mounted on first trailing platform 41 and third measuring rod 45 mounted on second trailing platform 43. Further measuring units 46, 47 are mounted on opposite ends of second measuring rod 44 and third measuring rod 45, respectively. The measuring units 46, 47 may comprise cameras 18 and may function as the second 11, third 12 and fourth measuring units 13 as explained above.

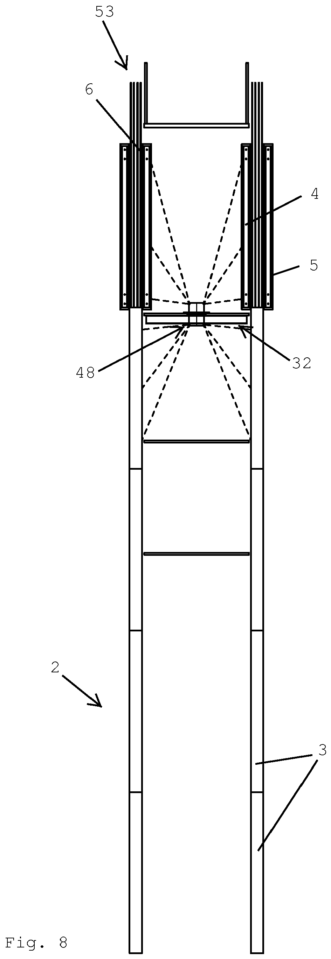

Fig. 8 shows an alternative embodiment of climbing formwork 1, in which a measuring device 48 comprising first measuring unit 10 and second measuring unit 11 is mounted on working platform 32 of support structure 7.

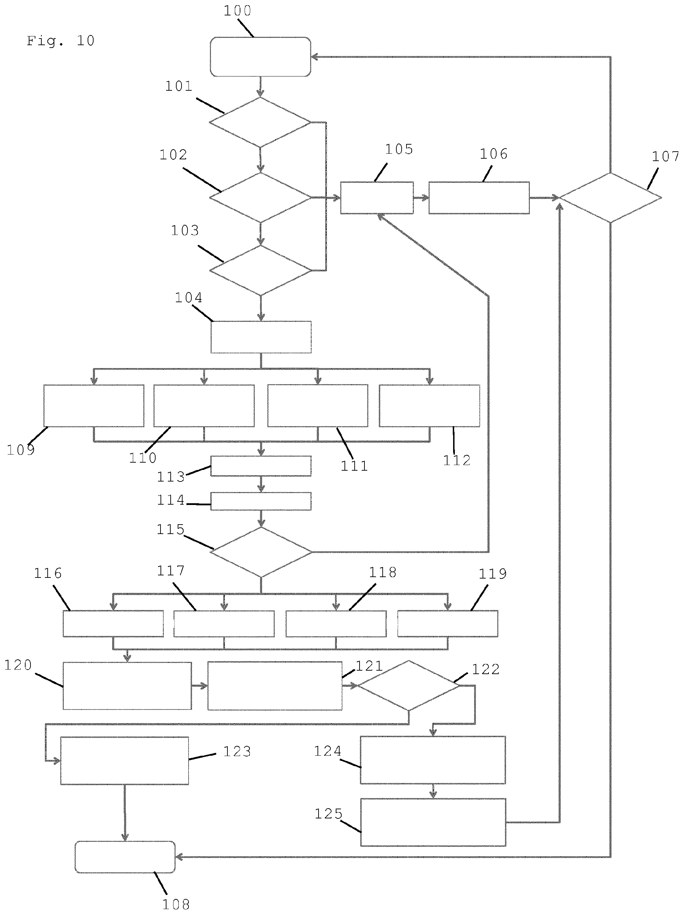

Fig. 10 shows a flow chart illustrating the adjustment of the climbing formwork 1 in preparation of the casting process.

At block 100, the measuring and adjustment procedure is started. At the outset, measuring units 10 to 13 may run through a number of tests. At block 101, the lighting is checked. The processing unit 17 may also detect percussions that could impair measurements (block 102). Finally, malfunctions of cameras 18 may be detected (block 103). In case all tests are completed successfully, measuring units 10 to 13 are activated simultaneously (block 104). If any of blocks 101 to 103 returns an error, an error message is received (block 105). Measures to detect and avoid the detected error are initiated (block 106). At block 107, the user may decide to re-start the procedure (block 100) or terminate the procedure (block 108). In case no error was detected, first measuring unit 10 scans the outer wall of first form element 4 (block 109). Simultaneously, second measuring unit 11 scans the inner wall of first casting segment 14 (block 110). Third measuring unit 12 scans the inner wall of second casting segment 15 (block 111). Fourth measuring unit 12 scans the inner wall of third casting segment 16 (block 112). Next, the data is stored (block 113) and verified (block 114).

At block 115, processing unit 17 attempts to detect first 39, second 40 and third reference elements 42 (block 115). If detection fails, an error message is delivered (block 105). If reference elements 39, 40, 42 are recognized, processing unit 17 calculates a 3D model of first form element 4 (block 116), a 3D model of first casting segment 14 (block 117), a 3D model of second casting segment 15 (block 118) and a 3D model of third casting segment 16 (block 119). Next, processing unit 17 combines the 3D models of casting segments 14 to 16 to a single 3D model as a blueprint for the uppermost casting segment (block 120). In particular, the single 3D model of the casting segments 14 to 16 may be a combination of the 3D models calculated for each casting segment 14 to 16. Next, a target 3D model of first form element 4 is calculated, which, if applied to first form element 4, would return a casting segment corresponding to the combined 3D model of previous casting segments 14 to 16 (block 121). At block 122, processing unit 17 checks for a deviation between the 3D model of first form element 4 in its present position and the target 3D model of first form element 4 (block 122). If no deviation is detected, the system signals that climbing formwork 1 is in perfect position for casting the next casting segment (block 123). However, if a deviation is detected, the system outputs a warning signal (block 124). Preferably, the processing unit transmits a control signal to drive element 24 connected to first form element 4 for bringing first form element 4 into the target position (block 125). The system then returns to block 107, according to which the user may decide to repeat the measurement or terminate the adjustment procedure (block 108).

Fig. 11 shows an alternative embodiment of climbing formwork 1, wherein a further measuring unit 54 is arranged for determining an actual spatial arrangement of a reinforcement 53 positioned in the cavity 6 and projecting upwardly thereof. In the shown embodiment, the further measuring unit 54 is mounted on a further longitudinal element 55 of measuring rod 25. The further longitudinal element 55 is mounted on top of first longitudinal element 26 of measuring rod 25. The processing unit 17 uses at least the measurement of second measuring unit 11 to determine a target spatial arrangement of reinforcement 53. Then, the position of reinforcement 53 may be adjusted, before first form element 4 is moved in its casting position.

## Claims

1. A climbing formwork (1) for erection of a concrete structure (2) by successively casting a plurality of casting segments (14, 15, 16), the climbing formwork (1) comprising
at least a first form element (4) for delimiting a cavity (6) to receive concrete for forming an uppermost casting segment,
a first support structure (7) to support the first form element (4),
**characterized by**
a first measuring unit (10) for determining an actual spatial arrangement of the first form element (4),
a second measuring unit (11) for determining a spatial arrangement of a first lower casting segment (14),
a processing unit (17), the processing unit (17) being arranged for calculating a target spatial arrangement of the first form element (4) from the spatial arrangement of the first lower casting segment (14), the processing unit (17) further being arranged for determining a deviation between the actual spatial arrangement and the target spatial arrangement of the first form element (4).

2. Climbing formwork (1) according to claim 1, **characterized in that** the processing unit (17) is connected to at least one of a displaying device (22) for displaying the deviation of the first form element (4), a signaling device (23) for signaling the deviation of the first form element (4) and a drive element (24) for bringing the first form element (4) into the target spatial arrangement.

3. Climbing formwork (1) according to claim 1 or 2, **characterized in that** a third measuring unit (12) is arranged for determining a spatial arrangement of a second lower casting segment (15), the processing unit (17) being arranged for calculating the target spatial arrangement of the first form element (4) from the spatial arrangement of the first lower casting segment (14) and the spatial arrangement of the second lower casting segment (15).

4. Climbing formwork (1) according to any of claims 1 to 3, **characterized in that** a further measuring unit (54) is arranged for determining an actual spatial arrangement of a reinforcement (53) positioned in the cavity (6) and projecting upwardly therefrom.

5. Climbing formwork (1) according to any one of claims 1 to 3, **characterized in that** the first measuring unit (10) and the second measuring unit (11) are arranged on a measuring rod (25), the measuring rod (25) preferably being arranged essentially vertically.

6. Climbing formwork (1) according to claim 5, **characterized in that** the measuring rod (25) has at least a first (26) and a second longitudinal element (27), the second measuring unit (11) being arranged between the one end of the first longitudinal element (26) and the one end of the second longitudinal element (27) of the measuring rod (25), the third measuring unit (12) being connected to the other end of the second longitudinal element (27).

7. Climbing formwork (1) according to claim 5 or 6, **characterized in that** the measuring rod (25) is mounted on the first support structure (7), in particular on a working platform (32) of the first support structure (7), the first support structure (7) having a mounting suspension (33) arranged for a swinging suspension of the measuring rod (25).

8. Climbing formwork (1) according to claim 7, **characterized in that** the mounting suspension (33) comprises a cardan frame (34), the cardan frame (34) being pivotable about a first essentially horizontal axis (35) with respect to the first support structure (7), the measuring rod (25) being pivotable about a second essentially horizontal axis (36) with respect to the cardan frame (34) .

9. Climbing formwork (1) according to claim 7, **characterized in that** the working platform (32) comprises a first (32a) and a second horizontal frame member (32b) spaced by a gap (32c), the measuring rod (25) extending through the gap (32c) and being pivotable about an essentially horizontal axis (37).

10. Climbing formwork (1) according to any of claims 1 to 9, **characterized in that** the first support structure (7) carries a first reference element (39) having a predetermined shape and/or position on the first support structure (7), the first reference element (39) being arranged in the field of view of both the first measuring unit (10) and the second measuring unit (11).

11. Climbing formwork (1) according to any of claims 1 to 10, **characterized in that** the first measuring unit (10) has at least one camera (18), preferably a plurality of cameras (18), for obtaining an image of at least a section of the surface of the first form element (4) and/or that the second measuring unit (11) has at least one further camera (18) for obtaining an image of at least a section of the surface of the first lower casting segment (14).

12. Climbing formwork (1) according to any of claims 1 to 11, **characterized in that** a plurality of first barcode elements is arranged on the surface of the first form element (4) and/or a plurality of second barcode elements is arranged on the surface of the first lower casting segment (14), the first measuring unit (10) being arranged for determining the positions of the first barcode elements, the second measuring unit (11) being arranged for determining the positions of the second barcode elements, each first barcode element preferably having a unique first identification code, each second barcode element preferably having a unique second identification code, the first measuring unit (10) preferably being arranged for reading out the unique first identification codes and the second measuring unit (11) preferably being arranged for reading out the unique second identification codes.

13. A method for erecting a concrete structure (2) by successively casting a plurality of concrete segments (14, 15, 16), comprising the steps of
arranging a climbing formwork (1) having at least a first form element (4) in a casting position, wherein the first form element (4) defines a cavity (6) to receive concrete for forming an uppermost casting segment,
supporting the first form element (4) in the casting position,
**characterized by**
determining an actual spatial arrangement of the first form element (4),
determining a spatial arrangement of a first lower casting segment (14),
calculating a target spatial arrangement of the first form element (4) from the spatial arrangement of the first lower casting segment,
calculating a deviation between the actual spatial arrangement and the target spatial arrangement of the first form element (4).

14. The method of claim 13, **characterized in that** the steps of determining the actual spatial arrangement of the first form element (4) and determining the spatial arrangement of the first lower casting segment (4) are performed simultaneously.

15. A measuring rod (25) for mounting on a climbing formwork (1) for progressive erection of a concrete structure (2), comprising
a first longitudinal element (26),
a first measuring unit (10) for determining a spatial arrangement of a form element (4), the first measuring unit (10) being connected to a first section of the first longitudinal element (26),
a second measuring unit (11) for determining a spatial arrangement of a casting segment (14, 15, 16), the second measuring unit (11) being connected to a second section of the first longitudinal element (26).

## Patentansprüche

1. Kletterschalung (1) zur Errichtung einer Betonstruktur (2) durch aufeinanderfolgendes Betonieren einer Vielzahl von Betonierabschnitten (14, 15, 16), wobei die Kletterschaltung (1) Folgendes aufweist:
wenigstens ein erstes Formelement (4) zum Begrenzen eines Hohlraums (6) für die Aufnahme von Beton zur Bildung eines obersten Betonierabschnitts, eine erste Trägerstruktur (7) zum Tragen des ersten Formelements (4),
**gekennzeichnet durch**
eine erste Messeinheit (10) zum Ermitteln einer tatsächlichen räumlichen Anordnung des ersten Formelements (4),
eine zweite Messeinheit (11) zum Ermitteln einer räumlichen Anordnung eines ersten unteren Betonierabschnitts (14),
eine Verarbeitungseinheit (17), wobei die Verarbeitungseinheit (17) angeordnet ist, um eine angestrebte räumliche Anordnung des ersten Formelements (4) aus der räumlichen Anordnung des ersten unteren Betonierabschnitts (14) zu berechnen, wobei die Verarbeitungseinheit (17) des Weiteren angeordnet ist, um eine Abweichung zwischen der tatsächlichen räumlichen Anordnung und der angestrebten räumlichen Anordnung des ersten Formelements (4) zu ermitteln.

2. Kletterschalung (1) nach Anspruch 1, **dadurch gekennzeichnet, dass** die Verarbeitungseinheit (17) mit wenigstens einer bzw. einem von einer Anzeigevorrichtung (22) zum Anzeigen der Abweichung des ersten Formelements (4), einer Signalisierungsvorrichtung (23) zum Signalisierung der Abweichung des ersten Formelements (4) und einem Antriebselement (24) zum Bringen des ersten Formelements (4) in die angestrebte räumliche Anordnung verbunden ist.

3. Kletterschalung (1) nach Anspruch 1 oder 2, **dadurch gekennzeichnet, dass** eine dritte Messeinheit (12) zum Ermitteln einer räumlichen Anordnung eines zweiten unteren Betonierabschnitts (15) angeordnet ist, wobei die Verarbeitungseinheit (17) angeordnet ist, um die angestrebte räumliche Anordnung des ersten Formelements (4) aus der räumlichen Anordnung des ersten unteren Betonierabschnitts (14) und der räumlichen Anordnung des zweiten unteren Betonierabschnitts (15) zu berechnen.

4. Kletterschalung (1) nach einem der Ansprüche 1 bis 3, **dadurch gekennzeichnet, dass** eine weitere Messeinheit (54) zum Ermitteln einer tatsächlichen räumlichen Anordnung einer Verstärkung (53), die in dem Hohlraum (6) positioniert ist und ausgehend davon nach oben vorsteht, angeordnet ist.

5. Kletterschalung (1) nach einem der Ansprüche 1 bis 3, **dadurch gekennzeichnet, dass** die erste Messeinheit (10) und die zweite Messeinheit (11) an einer Messstange (25) angeordnet sind, wobei die Messstange (25) vorzugsweise im Wesentlichen vertikal angeordnet ist.

6. Kletterschalung (1) nach Anspruch 5, **dadurch gekennzeichnet, dass** die Messstange (25) wenigstens ein erstes (26) und ein zweites Längselement (27) hat, wobei die zweite Messeinheit (11) zwischen dem einen Ende des ersten Längselements (26) und dem einen Ende des zweiten Längselements (27) der Messstange (25) angeordnet ist, wobei die dritte Messeinheit (12) mit dem anderen Ende des zweiten Längselements (27) verbunden ist.

7. Kletterschalung (1) nach Anspruch 5 oder 6, **dadurch gekennzeichnet, dass** die Messstange (25) an der ersten Trägerstruktur (7) befestigt ist, insbesondere an einer Arbeitsplattform (32) der ersten Trägerstruktur (7), wobei die erste Trägerstruktur (7) eine Befestigungsaufhängung (33) hat, die für eine schwingende Aufhängung der Messstange (25) angeordnet ist.

8. Kletterschalung (1) nach Anspruch 7, **dadurch gekennzeichnet, dass** die Befestigungsaufhängung (33) einen Kardanrahmen (34) aufweist, wobei der Kardanrahmen (34) um eine erste im Wesentlichen horizontale Achse (35) im Hinblick auf die erste Trägerstruktur (7) drehbar ist, wobei die Messstange (25) um eine zweite im Wesentlichen horizontale Achse (36) im Hinblick auf den Kardanrahmen (34) drehbar ist.

9. Kletterschalung (1) nach Anspruch 7, **dadurch gekennzeichnet, dass** die Arbeitsplattform (32) ein erstes (32a) und ein zweites horizontales Rahmenelement (32b), die durch einen Zwischenraum (32c) voneinander beabstandet sind, aufweist, wobei sich die Messstange (25) durch den Zwischenraum (32c) erstreckt und um eine im Wesentlichen horizontale Achse (37) drehbar ist.

10. Kletterschalung (1) nach einem der Ansprüche 1 bis 9, **dadurch gekennzeichnet, dass** die erste Trägerstruktur (7) ein erstes Bezugselement (39) trägt, das eine vorbestimmte Form und/oder Position an der ersten Trägerstruktur (7) hat, wobei das erste Bezugselement (39) in dem Sichtfeld von sowohl der ersten Messeinheit (10) als auch der zweiten Messeinheit (11) angeordnet ist.

11. Kletterschalung (1) nach einem der Ansprüche 1 bis 10, **dadurch gekennzeichnet, dass** die erste Messeinheit (10) wenigstens eine Kamera (18), vorzugsweise eine Vielzahl von Kameras (18) hat, um ein Bild von wenigstens einem Teil der Oberfläche des ersten Formelements (4) zu erhalten, und/oder dass die zweite Messeinheit (11) wenigstens eine weitere Kamera (18) hat, um ein Bild von wenigstens einem Teil der Oberfläche des ersten unteren Betonierabschnitts (14) zu erhalten.

12. Kletterschalung (1) nach einem der Ansprüche 1 bis 11, **dadurch gekennzeichnet, dass** eine Vielzahl von ersten Barcode-Elementen auf der Oberfläche des ersten Formelements (4) angeordnet ist und/oder dass eine Vielzahl von zweiten Barcode-Elementen auf der Oberfläche des ersten unteren Betonierabschnitts (14) angeordnet ist, wobei die erste Messeinheit (10) angeordnet ist, um die Positionen der ersten Barcode-Elemente zu ermitteln, wobei die zweite Messeinheit (11) angeordnet ist, um die Positionen der zweiten Barcode-Elemente zu ermitteln, wobei jedes erste Barcode-Element vorzugsweise einen einzigartigen ersten Kennzeichnungscode hat, jedes zweite Barcode-Element vorzugsweise einen einzigartigen zweiten Kennzeichnungscode hat, wobei die erste Messeinheit (10) vorzugsweise angeordnet ist, um die einzigartigen ersten Kennzeichnungscodes auszulesen, und die zweite Messeinheit (11) vorzugsweise angeordnet ist, um die einzigartigen zweiten Kennzeichnungscodes auszulesen.

13. Verfahren zur Errichtung einer Betonstruktur (2) durch aufeinanderfolgendes Betonieren einer Vielzahl von Betonabschnitten (14, 15, 16), das die folgenden Schritte umfasst:
Anordnen einer Kletterschalung (1), die wenigstens ein erstes Formelement (4) hat, in einer Betonierposition, wobei das erste Formelement (4) einen Hohlraum (6) für die Aufnahme von Beton zur Bildung eines obersten Betonierabschnitts definiert,
Tragen des ersten Formelements (4) in der Betonierposition,
**gekennzeichnet durch**
das Ermitteln einer tatsächlichen räumlichen Anordnung des ersten Formelements (4),
das Ermitteln einer räumlichen Anordnung eines ersten unteren Betonierabschnitts (14),
das Berechnen einer angestrebten räumlichen Anordnung des ersten Formelements (4) aus der räumlichen Anordnung des ersten unteren Betonierabschnitts,
das Berechnen einer Abweichung zwischen der tatsächlichen räumlichen Anordnung und der angestrebten räumlichen Anordnung des ersten Formelements (4).

14. Verfahren nach Anspruch 13, **dadurch gekennzeichnet, dass** die Schritte des Ermitteins der tatsächlichen räumlichen Anordnung des ersten Formelements (4) und des Ermitteins der räumlichen Anordnung des ersten unteren Betonierabschnitts (14) gleichzeitig durchgeführt werden.

15. Messstange (25) zur Befestigung an einer Kletterschalung (1) für eine progressive Errichtung einer Betonstruktur (2), wobei die Messstange (25) Folgendes aufweist:
ein erstes Längselement (26),
eine erste Messeinheit (10) zum Ermitteln einer räumlichen Anordnung eines Formelements (4), wobei die erste Messeinheit (10) mit einem ersten Teil des ersten Längselements (26) verbunden ist,
eine zweite Messeinheit (11) zum Ermitteln einer räumlichen Anordnung eines Betonierabschnitts (14, 15, 16), wobei die zweite Messeinheit (11) mit einem zweiten Teil des ersten Längselements (26) verbunden ist.

## Revendications

1. Coffrage grimpant (1) pour l'édification d'une structure en béton (2) en coulant successivement une pluralité de segments de coulée (14, 15, 16), le coffrage grimpant (1) comprenant
au moins un premier élément de forme (4) pour délimiter une cavité (6) pour recevoir du béton afin de former un segment de coulée le plus haut,
une première structure de support (7) pour supporter le premier élément de forme (4),
**caractérisé par**
une première unité de mesure (10) pour déterminer un agencement spatial réel du premier élément de forme (4),
une deuxième unité de mesure (11) pour déterminer un agencement spatial d'un premier segment de coulée inférieur (14),
une unité de traitement (17), l'unité de traitement (17) étant agencée pour calculer un agencement spatial cible du premier élément de forme (4) à partir de l'agencement spatial du premier segment de coulée inférieur (14), l'unité de traitement (17) étant en outre agencée pour déterminer un écart entre l'agencement spatial réel et l'agencement spatial cible du premier élément de forme (4).

2. Coffrage grimpant (1) selon la revendication 1, **caractérisé en ce que** l'unité de traitement (17) est raccordée à au moins l'un d'un dispositif d'affichage (22) pour afficher l'écart du premier élément de forme (4), d'un dispositif de signalisation (23) pour signaler l'écart du premier élément de forme (4) et d'un élément d'entraînement (24) pour amener le premier élément de forme (4) dans l'agencement spatial cible.

3. Coffrage grimpant (1) selon la revendication 1 ou 2, **caractérisé en ce qu'**une troisième unité de mesure (12) est agencée pour déterminer un agencement spatial d'un second segment de coulée inférieur (15), l'unité de traitement (17) étant agencée pour calculer l'agencement spatial cible du premier élément de forme (4) à partir de l'agencement spatial du premier segment de coulée inférieur (14) et l'agencement spatial du second segment de coulée inférieur (15).

4. Coffrage grimpant (1) selon l'une quelconque des revendications 1 à 3, **caractérisé en ce qu'**une unité de mesure supplémentaire (54) est agencée pour déterminer un agencement spatial réel d'un renfort (53) positionné dans la cavité (6) et faisant saillie vers le haut depuis celle-ci.

5. Coffrage grimpant (1) selon l'une quelconque des revendications 1 à 3, **caractérisé en ce que** la première unité de mesure (10) et la deuxième unité de mesure (11) sont agencées sur une perche de mesure (25), la perche de mesure (25) étant de préférence agencée essentiellement à la verticale.

6. Coffrage grimpant (1) selon la revendication 5, **caractérisé en ce que** la perche de mesure (25) comporte au moins un premier (26) et un second (27) élément longitudinal, la deuxième unité de mesure (11) étant agencée entre l'extrémité du premier élément longitudinal (26) et l'extrémité du second élément longitudinal (27) de la perche de mesure (25), la troisième unité de mesure (12) étant raccordée à l'autre extrémité du second élément longitudinal (27).

7. Coffrage grimpant (1) selon la revendication 5 ou 6, **caractérisé en ce que** la perche de mesure (25) est montée sur la première structure de support (7), notamment sur une plateforme de travail (32) de la première structure de support (7), la première structure de support (7) ayant une suspension de montage (33) agencée pour une suspension oscillante de la perche de mesure (25).

8. Coffrage grimpant (1) selon la revendication 7, **caractérisé en ce que** la suspension de montage (33) comprend un cadre de cardan (34), le cadre de cardan (34) étant pivotant autour d'un premier axe essentiellement horizontal (35) par rapport à la première structure de support (7), la perche de mesure (25) étant pivotante autour d'un second axe essentiellement horizontal (36) par rapport au cadre de cardan (34).

9. Coffrage grimpant (1) selon la revendication 7, **caractérisé en ce que** la plateforme de travail (32) comprend un premier (32a) et un second (32b) organe de cadre horizontal espacés par un écartement (32c), la perche de mesure (25) s'étendant à travers l'écartement (32c) et étant pivotante autour d'un axe essentiellement horizontal (37).

10. Coffrage grimpant (1) selon l'une quelconque des revendications 1 à 9, **caractérisé en ce que** la première structure de support (7) porte un premier élément de référence (39) ayant une forme et/ou une position prédéterminées sur la première structure de support (7), le premier élément de référence (39) étant agencé dans le champ de vue à la fois de la première unité de mesure (10) et de la deuxième unité de mesure (11).

11. Coffrage grimpant (1) selon l'une quelconque des revendications 1 à 10, **caractérisé en ce que** la première unité de mesure (10) comporte au moins une caméra (18), de préférence une pluralité de caméras (18), pour obtenir une image d'au moins une section de la surface du premier élément de forme (4) et/ou **en ce que** la deuxième unité de mesure (11) comporte au moins une caméra supplémentaire (18) pour obtenir une image d'au moins une section de la surface du premier segment de coulée inférieur (14).

12. Coffrage grimpant (1) selon l'une quelconque des revendications 1 à 11, **caractérisé en ce qu'**une pluralité de premiers éléments de code-barres est agencée sur la surface du premier élément de forme (4) et/ou une pluralité de seconds éléments de code-barres est agencée sur la surface du premier segment de coulée inférieur (14), la première unité de mesure (10) étant agencée pour déterminer les positions des premiers éléments de code-barres, la deuxième unité de mesure (11) étant agencée pour déterminer les positions des seconds éléments de code-barres, chaque premier élément de code-barres ayant de préférence un premier code d'identification unique, chaque second élément de code-barres ayant de préférence un second code d'identification unique, la première unité de mesure (10) étant de préférence agencée pour lire les premiers codes d'identification uniques et la deuxième unité de mesure (11) étant de préférence agencée pour lire les seconds codes d'identification uniques.

13. Procédé d'édification d'une structure en béton (2) en coulant successivement une pluralité de segments de béton (14, 15, 16), comprenant les étapes
d'agencement d'un coffrage grimpant (1) ayant au moins un premier élément de forme (4) dans une position de coulée, dans lequel le premier élément de forme (4) définit une cavité (6) pour recevoir du béton afin de former un segment de coulée le plus haut,
de support du premier élément de forme (4) dans la position de coulée,
**caractérisé par**
la détermination d'un agencement spatial réel du premier élément de forme (4),
la détermination d'un agencement spatial d'un premier segment de coulée inférieur (14),
le calcul d'un agencement spatial cible du premier élément de forme (4) à partir de l'agencement spatial du premier segment de coulée inférieur,
le calcul d'un écart entre l'agencement spatial réel et l'agencement spatial cible du premier élément de forme (4).

14. Procédé selon la revendication 13, **caractérisé en ce que** les étapes de détermination de l'agencement spatial réel du premier élément de forme (4) et de détermination de l'agencement spatial du premier segment de coulée inférieur (4) sont réalisées simultanément.

15. Perche de mesure (25) à monter sur un coffrage grimpant (1) pour l'édification progressive d'une structure en béton (2), comprenant
un premier élément longitudinal (26),
une première unité de mesure (10) pour déterminer un agencement spatial d'un élément de forme (4), la première unité de mesure (10) étant raccordée à une première section du premier élément longitudinal (26),
une deuxième unité de mesure (11) pour déterminer un agencement spatial d'un segment de coulée (14, 15, 16), la deuxième unité de mesure (11) étant raccordée à une seconde section du premier élément longitudinal (26).
